# EUROPÄISCHE PATENTSCHRIFT

(11) **EP 1 197 527 B1**
(45) Veröffentlichungstag und Bekanntmachung des Hinweises auf die Patenterteilung: **02.01.2008**
(21) Anmeldenummer: 01121983.9
(22) Anmeldetag: 13.09.2001
(51) Int. Cl.: C08L 101/00, C08J 7/12, C08J 3/12, C08J 9/22

(54) **Modifizierte pulverförmige Kunststoffe**
Modified powdery plastics
Matières plastiques de charge modifiées

(30) Priorität: 13.10.2000 DE 10050886
(43) Veröffentlichungstag der Anmeldung: 17.04.2002
(73) Patentinhaber: Air Liquide Deutschland GmbH, 40235 Düsseldorf (DE); Messer Group GmbH, 65843 Sulzbach (DE)
(72) Erfinder: Von Bonn, Rolf,, 47269 Duisburg (DE); Barbe, Joachim, 47918 Tönisvorst (DE)
(74) Vertreter: Kahlhöfer, Hermann

(56) Entgegenhaltungen:
- EP-A- 0 196 468
- EP-A- 0 566 883
- EP-A- 0 738 751
- WO-A-93/23441
- DATABASE WPI Section Ch, Week 198518 Derwent Publications Ltd., London, GB; Class A17, AN 1985-107735 XP002191093 & JP 60 051725 A (ASAHI CHEM IND CO LTD), 23. März 1985 (1985-03-23)
- DATABASE WPI Section Ch, Week 199031 Derwent Publications Ltd., London, GB; Class A14, AN 1990-235364 XP002191094 & JP 02 163128 A (DAIKIN KOGYO KK), 22. Juni 1990 (1990-06-22)

## Beschreibung

Die Erfindung betrifft einen Kunststoff, oberflächenmodifizierte Kunststoffteilchen, ein Verfahren zur Herstellung des Kunststoffes, ein Verfahren zur Herstellung chemisch modifizierter Kunststoffteilchen und die Verwendung des Kunststoffes oder chemisch modifizierter Kunststoffteilchen.

Die Oberflächen von Kunststoffen wie Polyäthylen (PE) oder Polypropylen (PP) werden vorbehandelt, um nachfolgende Fertigungsprozesse wie Kleben, Beschichten, Lackieren oder Bedrucken der Oberfläche zu ermöglichen. Bisher wird die Vorbehandlung mit physikalische Methoden wie Beflammen (z. B. bekannt aus JP 60 051725 A), Plasma- oder Coronabehandlung oder durch chemische Modifizierung z. B. Fluorierung am fertigen Bauteil durchgeführt.

Die Oberflächen von Kunststoffkraftstoffbehältern werden zur Sperrschichtbildung durch Gasphasenfluorierung behandelt, um die Permeation von Treibstoff zu verringern.

Ein Verfahren zur Oberflächenbehandlung von Polyolefinen wird beispielsweise in der EP 0 738 751 A1 beschrieben. Weitere Verfahren sind beispielsweise aus der WO 93/23441 A, JP 02 163128, EP 0 738 751 A, EP 0 556 883 A und der EP 0 196 468 A bekannt.

Nachteil dieser Methoden ist, daß zusätzlicher Arbeitsaufwand für die Oberflächenbehandlung der Kunststoffe beim Verarbeiter anfällt.

Der Erfindung liegt die Aufgabe zugrunde, ein Material und ein Verfahren bereit zu stellen, die den Arbeitsaufwand für die Oberflächenbehandlung von Kunststoffen beim Verarbeiter verringern.

Gelöst wurde die Aufgabe durch einen Kunststoff mit den in Anspruch 1 beschriebenen Merkmalen.

Der Kunststoff mit modifizierten Anteilen wird durch Verschmelzen oder Sintern von oberflächlich modifizierten Kunststoffteilchen wie Kunstoffpulver oder Kunststoffgranulat erhalten. Zur Modifizierung der Oberfläche der Kunststoffteilchen eignen sich Verfahren, die zur Modifizierung von Oberflächen von Kunststoffteilen bekannt sind wie die Behandlung mit gasförmigem Sauerstoff oder sauerstoffhaltigen Gasen, mit Ozon oder ozonhaltigen Gasen, mit gasförmigem Schwefeltrioxid (SO3) oder schwefeltrioxidhaltigen Gasen, mit Wasserstoff oder wasserstoffhaltigen Gasen, mit Chlor oder chlorhaltigen Gasen oder mit Fluor oder fluorhaltigen Gasen.

Ein Kunststoff mit fluorierten Anteilen wird durch Verschmelzen oder Sintern von oberflächlich fluorierten Kunststoffteilchen wie Kunstoffpulver oder Kunststoffgranulat erhalten. Die Kunststoffteilchen sind vorzugsweise oberflächlich fluoriert und enthalten einen im wesentlichen unveränderten Kern. Durch die thermische Behandlung der oberflächlich fluorierten Kunststoffteilchen entsteht ein Kunststoff, der aus behandelten und unbehandelten Kunststoffanteilen besteht, die in dem Kunststoff verteilt sind.

Gemäß der Erfindung modifizierbare Kunststoffe sind alle thermoplastischen Kunststoffe, insbesondere solche, die C-H-Bindungen enthalten, z. B. Polyolefine (z. B.
Polyethylen, Polypropylen), Polystyrol (z. B. Styrolhomopolymerisate, StyrolCopolymerisate), Polyvinylchlorid, Polyacrylnitril, Polymethylmethacrylat, Polyvinylcarbazol, Polyacetal, thermoplastische Fluorkunststoffe (z. B. Tetrafluorethylen-Ethylen-Mischpolymerisat,), thermoplastische Polykondensate (z. B. Polyamide, Polycarbonat, Polyalkylenterephthalate, Polyphenylenoxid, Polysulfon, Polyphenylensulfid, Polyarylsulfon, Polyaryläther).

Ein weiterer Gegenstand der Erfindung sind oberflächenmodifizierte Kunststoffteilchen, insbesondere fluorierte Kunststoffteilchen.

Oberflächlich fluorierte Kunststoffteilchen werden beispielsweise durch Gasphasenfluorierung der entsprechenden unbehandelten Kunststoffteilchen hergestellt. Verfahren zur Gasphasenfluorierung von Kunststoffoberflächen sind in der DE-PS 35 11 743, in der EP 0566883 A1 (interne Bezeichnung MG 1841) und in der EP 0 738 751 A1 (interne Bezeichnung MG 1942) beschrieben, worauf hiermit Bezug genommen wird. Die genannten Verfahren sind auf Kunststoffpulver und Kunststoffgranulate übertragbar.

Die Oberflächenmodifizierung erfolgt an Kunststoffteilchen oder Polymerteilchen, vor dem Zusatz von Zusatzstoffen und Hilfsstoffen oder danach. Beispielsweise können Polymerteilchen aus dem reinen Polymer zunächst oberflächenmodifiziert und dann, z. B. im Extruder, mit Zusatz- und Hilfsstoffen versehen werden. Vorzugsweise werden Teilchen aus fertigen Kunststoffmischungen (d.h. Kunststoff mit Hilfsstoffen und Zusatzstoffen) oberflächenmodifiziert.

Die in der Regel oberflächlich modifizierten, insbesondere fluorierten Kunststoffteilchen wie Pulver oder Granulat sind im allgemeinen thermoplastisch verarbeitbar. Aus diesen oberflächlich modifizierten Kunststoffteilchen sind auf üblichem Wege, z. B. durch Extrusion, im Blasextrusions- oder Spritzgießverfahren, Formkörper, Folien oder Fasern (z. B. Fäden) herstellbar, die aus dem Kunststoff gemäß der Erfindung bestehen. Bei der thermoplastischen Verarbeitung von oberflächlich fluorierten Kunststoffteilchen erhält man somit z. B. Formkörper aus einem Kunststoff, der fluorierte Anteile neben unfluorierten Anteilen enthält (z. B. bei behandelten Polyolefinen). Die fluorierten Anteile sind in der Regel im Kunststoff verteilt.

Aus modifizierten Kunststoffteilchen und unmodifizierten Kunststoffteilchen aus dem gleichen Basiskunststoff lassen sich vorteilhaft Kunststoffmischungen, insbesondere Blends (Polymerblends oder Polymerlegierungen), herstellen. Die Kunststoffmischungen sind in der Regel Mischungen von Polymeren (Basispolymer) und modifizierten (chemisch veränderten) Polymeren. Durch Veränderung der Anteile von modifizierten und unmodifizierten Kunststoffteilchen können die Eigenschaften (z. B. die Oberflächeneigenschaften) der in der Regel durch Aufschmelzen wenigstens eines Kunststoffanteiles (bzw. einer Kunstsoffkomponente) hergestellten Kunststoffmischungen gezielt beeinflußt werden. Beispiele solcher Kunststoffmischungen sind Polymermischungen aus PE (insbesondere HDPE) und fluoriertem oder chloriertem PE (insbesondere fluoriertem oder chloriertem HDPE), aus PP und fluoriertem oder chloriertem PP, aus PE und sauerstoff- oder ozonbehandeltem PE, aus PP und sauerstoff- oder ozonbehandeltem PP, wobei die chemisch modifizierten Polymere durch chemische Behandlung (insbesondere Oberflächenbehandlung) entsprechender Kunststoffteilchen erhalten werden.

Aus modifizierten Kunststoffen nachträglich thermoplastisch hergestellte Fasern dienen vorteilhaft zur Herstellung von Geweben, Vliesen und textilen Produkten. Die hergestellten Fasern sind aufgrund der modifizierten Oberfläche, die durch geeignete Wahl der Kunststoffart und der Behandlungsart vom Fachmann gezielt hergestellt werden kann, besonders vorteilhaft für die Herstellung von Verbundmaterialien wie faserverstärkte Kunststoffe, insbesondere duroplastische Kunstharze, faserverstärkte Baustoffe (z. B. faserverstärkter Beton) oder faserverstärktes Papier.

Der aus den modifizierten Kunststoffteilchen hergestellte Kunststoff oder entsprechend hergestellte Kunststoffteile wie Formkörper (z. B. Vollteile oder Hohlkörper) weisen Oberflächeneigenschaften wie eine verbesserte Beklebbarkeit oder Bedruckbarkeit auf. Die Eigenschaften des Kunststoffes oder Formteiles machen eine spätere Vorbehandlung der Teile oder Bauteile überflüssig. Der bisher vom Verarbeiter zu leistende Aufwand zur Erzielung der geforderten Oberflächeneigenschaften der Formteile wird damit eingespart.

Die Barriereeigenschaften (Verringerung der Permeabilität von Treibstoffkomponenten) der Kunststoffe gemäß der Erfindung, insbesondere der Kunststoffe mit fluorierten Anteilen (z. B. modifiziertes PE oder PP), sind gegenüber den Ausgangskunststoffen deutlich verbessert. Mit Hilfe fluorierter Kunststoffpulver oder Kunststoffgranulate, insbesondere mittels Gasphasenfluorierung modifizierter Polyolefinpulver (z. B. HDPE, High Density Polyethylene) werden vorteilhaft Kunststoffkraftstoffbehälter (KKB) hergestellt, die aufgrund der günstigen Barriereeigenschaften nicht mit einer Gasphasenfluorierung nachbehandelt werden müssen. Die Herstellung von Kunststoffkraftstoffbehältern (z. B. Ausgangskunststoff Polyethylen, insbesondere HDPE) wird dadurch wesentlich vereinfacht.

Die Oberflächeneigenschaften des Kunststoffes lassen sich durch die Intensität der Behandlung der Kunststoffteilchen und/oder durch den Anteil der zugemischten unbehandelten Kunststoffteilchen einstellen. Ausgehend von einer in der Regel hydrophoben Oberfläche des unbehandelten Kunststoffes lassen sich so mehr oder weniger hydrophile Oberflächen bei den hergestellten Kunststoffen mit modifizierten Anteilen erzeugen. Beispielsweise wird ein Kunststoff mit fluorierten Anteilen in den Oberflächeneigenschaften, insbesondere die Hydrophobie oder Wasserbenetzbarkeit der Oberfläche, durch Verwendung von mehr oder weniger stark fluorierten Kunststoffteilchen, durch Mischen von zwei oder mehr Sorten von fluorierten Kunststoffteilchen (d.h. Mischen von Kunststoffteilchen mit unterschiedlichem Fluorierungsgrad) oder durch Mischen von Kunststoffteilchen eines Fluorierungsgrades mit entsprechend gewählten Anteilen von unbehandelten Kunststoffteilchen (Basiskunststoff) hergestellt. Bei der Herstellung des modifizierten Kunststoffes werden in der Regel die Kunststoffteilchen aufgeschmolzen.

Ein weiterer Gegenstand der Erfindung ist ein Verfahren zur Herstellung eines Kunststoffes oder eines Formkörpers, einer Folie oder einer Faser aus Kunststoff, wobei oberflächenmodifizierte Kunststoffteilchen durch thermoplastische Verarbeitung oder durch Sintern verbunden werden.

### Beispiel

### Herstellung von fluoriertem PE-Pulver

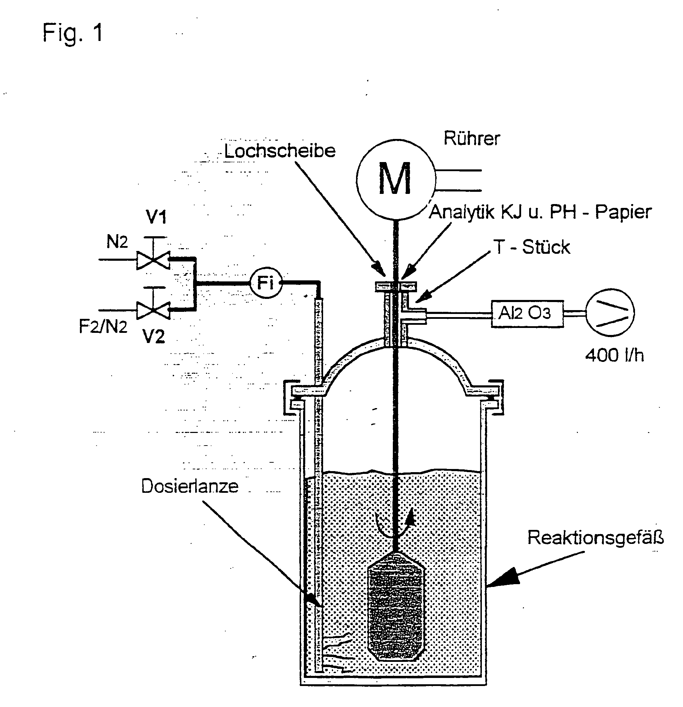

Zur Durchführung der Pulverfluorierung wurde der in Fig. 1 dargestellte Versuchsaufbau benutzt.
Materialbeschreibung des verwendeten Pulvers: Lupolen 4261 A (Hersteller: Elenac), Spritzgußtype, Korngröße: ca. 0,2-1,5 mm.

### Durchführung der Versuche:

Die variierten Versuchsparameter sind Tabelle 1 zu entnehmen.
Das Reaktionsgefäß wurde mit 300g Pulver befüllt.
Zur Entfernung der Luft ( Versuche 1-3 wurden in Abwesenheit von Sauerstoff durchgeführt ) wurde über V1 der Spülgasstrom ( N₂ ) eingestellt.
Zur Unterstützung der Sauerstoffentfernung aus den Hohlräumen der Pulverschüttung wurde während der Spülung der Rührer auf 70 Umdrehungen / Min. eingestellt.

Die Dosierlanze bestand aus einem Edelstahlrohr 6 X 1. Die untere Öffnung war zugeschweißt. Der Gaseinlass erfolgte über vier übereinander angeordnete seitliche Bohrungen ( Abstand ca. 2mm, ∅ 1 mm ) am unteren Ende der Lanze.
Nach abgeschlossener Spülung wurde zur Durchführung der Fluorierung das Fluorstickstoffgasgemisch über V2 in das Reaktionsgefäß eingeleitet. Um eine homogene Fluorierung des Pulvers zu erreichen wurde mit 70 Umdrehungen / Min. gerührt. Zur Entsorgung des nicht zur Reaktion gelangten F₂ und des Reaktionsproduktes HF wurde das Abgas an der Gasaustrittsöffnung des Reaktionsgefäßes über eine Al₂O₃-Absorberschüttung angesaugt. Die Saugleistung der Pumpe lag mit 400 l/h weit über der zudosierten Reaktionsgasmenge ( max. 50 l / h ), so daß sichergesellt war, daß die toxischen Abgase nicht an die Atmosphäre gelangen konnten. Die zum Rührer weisende Öffnung des T- Stücks war mit einer lose aufliegenden Lochscheibe abgedeckt, deren Bohrung so gewählt war, daß eine freie Drehbewegung des Rührers bei minimierter Gasaustrittsöffnung gewährleistet werden konnte.
Nach beendeter Fluorierung erfolgte die Entfernung des F₂ bzw. HF aus dem Pulver mittels Stickstoffspülung über V1 wobei zur Unterstützung mit 70 Umdrehungen gerührt wurde. Zur analytischen Überwachung des Spülvorgangs wurde die Lochscheibenabdeckung vom T- Stück angehoben, um die Atmosphäre im T- Stück mittels PH- Papier auf HF- Verunreinigung zu überprüfen. In gleicher Weise konnte die Fluorumsetzung während der Flourierung mittels KJ- Stärke- Papier bestimmt werden.

**Tabelle 1**

| Versuch Nr. | Spülung vor Fluorierung | | Fluorierung | | | Spülung nach Fluorierung | |
|---|---|---|---|---|---|---|---|
| | Gasfluß | Dauer | Gasfluß | F₂- Konz. | Dauer | Gasfluß | Dauer |
| 1 | 30 L N₂ / h | 15 Min. | 50 L / h | 1% F₂/ N₂ | 15 Min. | 100 L / h | 20 Min. |
| 2 | 30 L N₂ / h | 15 Min. | 50 L / h | 1% F₂/ N₂ | 30 Min. | 100 L / h | 30 Min. |
| 3 | 30 LN₂ / h | 15 Min. | 50 L / h | 1% F₂/ N₂ | 60 Min. | 100 L / h | 45 Min. |
| 4 | --- | --- | 50 l/h | 0,45%F2,2,7%O₂/ N₂ 45 Min. | | 100 L / h | 45 Min. |

Bei allen vier Versuchseinstellungen zeigte sich, daß schon nach kurzer Fluoreinwirkung das Pulver verklebte und eine veränderte Rieselfähigkeit aufwies. Um die Verarbeitbarkeit des Pulvers mit den üblichen Bearbeitungsverfahren sicherzustellen, wurde das Pulver einer mehrstündigen Wärmebehandlung bei 105° C unterzogen. Hierdurch wurde die Rieselfähigkeit des Pulvers wieder hergestellt. Der geringe Gewichtsverlust von < 0,2 Gew.% läßt vermuten, daß es sich bei der Wärmebehandlung nicht um eine Trocknung, sondern um eine Entsinterung handelt. Das fluorierte und wärmebehandelte Pulver aus den Versuchseinstellungen 1-3 wies im Vergleich zum unbehandeltem Material eine schwache gelbliche Verfärbung auf. Das im vierten Versuch in Anwesenheit von Sauerstoff fluorierte Pulver war deutlicher gelb/braun verfärbt.
Die auf das Pulver aufgebrachte Fluormenge wurde analytisch bestimmt. Die Analysenwerte sind gemeinsam mit den berechneten theoretischen Werten in Tabelle 2 zusammengefaßt.

**Tabelle 2**

| Versuch Nr. | Fluorbelegung theoretisch (x) | Fluorbelegung Analytik |
|---|---|---|
| 1 | 0,066 µg/cm² | 0,04 µg/cm² |
| 2 | 0,13 µg/cm² | 0,1 µg/cm² |
| 3 | 0,26 µg/cm² | 0,15 µg/cm² |
| 4 | 0,09 µg/cm² | 0,03 µg/cm² |

| | | |
|---|---|---|
| (x) 1 Mol F₂ =38g=241, 20°C, 100% Umsetzung | | |

## Patentansprüche

1. Kunststoff mit chemisch modifizierten Anteilen, die im Kunststoff verteilt sind, erhältlich durch thermoplastische Verarbeitung, Verschmelzen oder Sintern eines Pulvers oder Granulates aus chemisch modifizierten Kunststoffteilchen oder durch thermoplastische Verarbeitung, Verschmelzen oder Sintern von Gemischen eines Pulvers oder Granulats aus chemisch modifizierten Kunststoffteilchen und unmodifizierten Kunststoffteilchen, wobei die chemisch modifizierten Kunststoffteilchen durch Reaktion eines Ausgangsmaterials mit Wasserstoff, Ozon, Schwefeltrioxid, Chlor oder Fluor erhältlich sind.

2. Kunststoff nach Anspruch 1, **dadurch gekennzeichnet, daß** der Kunststoff ein thermoplastischer Kunststoff ist.

3. Kunststoff nach Anspruch 1 oder 2, **dadurch gekennzeichnet, daß** ein Polyolefin, Polystyrol, Polyvinylchlorid, Polyacrylnitril, Polymethylmethacrylat, Polyvinylcarbazol, Polyacetal, ein thermoplastischer Fluorkunststoff oder ein thermoplastisches Polykondensat dem Kunststoff als Basismaterial zugrunde liegt.

4. Kunststoff nach einem der Ansprüche 1 bis 3, **dadurch gekennzeichnet, daß** die chemisch modifizierten Kunststoffteilchen an der Oberfläche chemisch modifiziert sind.

5. Verfahren zur Herstellung eines Kunststoffes oder eines Formkörpers, einer Folie oder einer Faser aus Kunststoff, **dadurch gekennzeichnet, daß** chemisch modifizierte Kunststoffteilchen oder Gemische aus chemisch modifizierten Kunststoffteilchen und unmodifizierten Kunststoffteilchen durch thermoplastische Verarbeitung, Schmelzen oder durch Sintern verbunden oder in eine Masse überführt werden, wobei die chemisch modifizierten Kunststoffteilchen durch Reaktion eines Ausgangsmaterials mit Wasserstoff, Ozon, Schwefeltrioxid, Chlor oder Fluor erhältlich sind und als Pulver oder Granulat eingesetzt werden.

## Claims

1. Plastic with chemically modified fractions dispersed in the plastic, obtainable via thermoplastic processing, melting or sintering of a powder or granules composed of chemically modified plastics particles or via thermoplastic processing, melting or sintering of mixtures of a powder or granules composed of chemically modified plastics particles and unmodified plastics particles, where the chemically modified plastics particles are obtainable via reaction of a starting material with hydrogen, ozone, sulphur trioxide, chlorine or fluorine.

2. Plastic according to Claim 1, **characterized in that** the plastic is a thermoplastic.

3. Plastic according to Claim 1 or 2, **characterized in that** a polyolefin, polystyrene, polyvinyl chloride, polyacrylonitrile, polymethyl methacrylate, polyvinylcarbazole, polyacetal, or a thermoplastic fluoroplastic or a thermoplastic polycondensate is parent material on which the plastic is based.

4. Plastic according to any of Claims 1 to 3, **characterized in that** the chemically modified plastics particles have been chemically modified at the surface.

5. Process for production of a plastic or of a moulding, of a foil or of a fibre composed of plastic, **characterized in that** thermoplastic processing, melting or sintering is used to bond chemically modified plastics particles or mixtures composed of chemically modified plastics particles and unmodified plastics particles or to convert them to a mass, where the chemically modified plastics particles are obtainable via reaction of a starting material with hydrogen, ozone, sulphur trioxide, chlorine or fluorine and are used in the form of powder or granules.

## Revendications

1. Matière synthétique contenant des fractions chimiquement modifiées, qui sont distribuées dans la matière synthétique, et que l'on peut obtenir par traitement thermoplastique, fusion ou frittage d'une poudre ou de granulés de particules de matière synthétique chimiquement modifiées, ou par traitement thermoplastique, fusion ou frittage de mélanges d'une poudre ou de granulés de particules de matière synthétique chimiquement modifiées et de particules de matière synthétique non modifiées, où les particules de matière synthétique chimiquement modifiées peuvent être obtenues par réaction d'une matière première avec de l'hydrogène, de l'ozone, du trioxyde de soufre, du chlore ou du fluor.

2. Matière synthétique suivant la revendication 1, **caractérisée en ce que** la matière synthétique est une matière synthétique thermoplastique.

3. Matière synthétique suivant la revendication 1 ou 2, **caractérisée en ce que** la matière synthétique est à base de polyoléfine, de polystyrène, de poly(chlorure de vinyle), de polyacrylonitrile, de poly(méthacrylate de méthyle), de polyvinylcarbazole, de polyacétal, d'une matière synthétique fluorée thermoplastique ou d'un produit de polycondensation thermoplastique en tant que matériau de base.

4. Matière synthétique suivant l'une quelconque des revendications 1 à 3, **caractérisée en ce que** les particules de matière synthétique chimiquement modifiées sont chimiquement modifiées en surface.

5. Procédé de préparation d'une matière synthétique ou d'un corps moulé, d'une feuille ou d'une fibre en matière synthétique, **caractérisé en ce que** des particules de matière synthétique chimiquement modifiées ou des mélanges de particules de matière synthétique chimiquement modifiées et de particules de matière synthétique non modifiées sont, par traitement thermoplastique, fusion ou frittage, liées ou transformées en une masse, où les particules de matière synthétique chimiquement modifiées peuvent être obtenues par réaction d'une matière première avec de l'hydrogène, de l'ozone, du trioxyde de soufre, du chlore ou du fluor et sont mises en oeuvre en tant que poudres ou granulés.
